# EUROPÄISCHE PATENTANMELDUNG

(11) **EP 4 057 458 A1**
(43) Veröffentlichungstag der Anmeldung: **14.09.2022**
(21) Anmeldenummer: 22155815.8
(22) Anmeldetag: 09.02.2022
(51) Int. Cl.: H02G 1/08, H02G 9/04, F16L 1/00, H02G 1/06, H02G 3/04, B29C 39/10

(54) **SICHERN VON LEITUNGEN IN EINEM KANAL EINER SCHIENENVERKEHRSINFRASTRUKTUR**

(30) Priorität: 10.03.2021 DE 102021202318
(71) Anmelder: Hyperion Verwaltung GmbH, 21397 Vastorf (DE)
(72) Erfinder: FRENZEL, Jörg, 21397 Vastorf, OT Rohstorf (DE)
(74) Vertreter: Zucker, Volker

(57) **Zusammenfassung**

Die Erfindung betrifft eine Anordnung (30) und ein Verfahren zum Sichern wenigstens einer Leitung (18) einer Schienenverkehrsinfrastruktur (13),
wobei die Leitung (18) in einem Kanal (12) angeordnet ist, der sich entlang eines Gleises (14) erstreckt, und wobei das Verfahren umfasst:
- Bereitstellen wenigstens eines ersten aufgeschmolzenen kunststoffhaltigen Materialvolumens (20) in dem Kanal (12), wobei das Materialvolumen (20) die Leitung (18) zumindest abschnittsweise kontaktiert;
- Aushärten des Materialvolumens (20) und dadurch Sichern der Leitung (18) in dem Kanal (12).

## Beschreibung

Die Erfindung betrifft eine Anordnung und ein Verfahren zum Sichern von Leitungen in Kanälen einer Schienenverkehrsinfrastruktur.

Es ist bekannt, dass als Teil einer Schienenverkehrsinfrastruktur oftmals Leitungskanäle vorgesehen sind, die sich in der Nähe von und entlang von Gleisen erstrecken. Die Kanäle sind typischerweise aus einem Betonmaterial hergestellt. Sie weisen oftmals einen wannenartigen Grundkörper auf, in dem die Leitungen angeordnet werden, und eine Deckelstruktur, um den Kanal zu verschließen. Bei den Leitungen handelt es sich typischerweise um elektrische Leitungen (d.h. Kabel) und insbesondere Hochvoltkabel.

Aufgrund hoher Rohstoffpreise ist es ein bekanntes Problem, dass metallische Elemente und insbesondere Leitungen von Schienenverkehrsinfrastrukturen gestohlen werden. Insbesondere werden oftmals Kabel aus den geschilderten Kabelkanälen entwendet. Hier machen sich Diebe zunutze, dass die Deckel der Kanäle meist nicht dauerhaft oder lediglich lösbar befestigt sind, um eine Zugänglichkeit für Reparaturzwecke zu gewährleisten. Wurde ein Zugang zum Inneren des Kanals erlangt, können die Leitungen z.B. nach einem abschnittsweisen Durchtrennen entnommen werden.

Neben wirtschaftlichen Schäden für den Betreiber der Schienenverkehrsinfrastruktur resultieren derartige Kabeldiebstähle in Unterbrechungen des Bahnverkehrs, die Infrastruktur wird sabotiert. Ferner werden durch die verbleibenden offenliegenden Leitungsabschnitte erhebliche Gefährdungspotentiale nahe der Bahnstrecke geschaffen.

Bisher existieren keine zuverlässigen und wirtschaftlichen Ansätze, um die geschilderten Diebstähle zu vermeiden. So ist es beispielsweise bekannt, Kupferkabel mit einer sogenannten künstlichen DNA zu versehen, sodass deren Herkunft nachvollziehbar ist. Hierfür werden sogenannte mikrolithographische Plättchen verwendet, die unter UV-Licht erkennbar sind. Hierdurch sollen die Kabel als Eigentum des Bahnbetreibers gekennzeichnet werden und sollten dadurch eigentlich nach einem Diebstahl unverkäuflich sein, entwendet werden diese dennoch immer wieder. Andere Ansätze betreffen den verstärkten Einsatz von Sicherheitspersonal, was jedoch kostenintensiv und insbesondere bei abgelegenen Streckenabschnitten wenig erfolgversprechend ist.

Es besteht somit ein Bedarf dafür, Leitungsdiebstähle aus Kanälen einer Schienenverkehrsinfrastruktur zuverlässig und mit wirtschaftlich vertretbarem Aufwand zu erschweren.

Diese Aufgabe wird durch Gegenstände der beigefügten unabhängigen Ansprüche gelöst. Vorteilhafte Weiterbildungen sind in den abhängigen Ansprüchen angegeben.

Eine Grundidee der Erfindung besteht darin, durch technische oder auch bauliche Maßnahmen das Entwenden von Leitungen aus den geschilderten Kanälen zu erschweren. Hierfür werden die Leitungen per zunächst aufgeschmolzenen und dann wieder erhärtendem Material miteinander und/oder mit dem Kanal verbunden. Anders ausgedrückt kontaktiert oder benetzt das aufgeschmolzene Materialvolumen sowohl die Leitungen als auch die Innenwände des Kanals. Bei einem Erhärten werden somit die Leitungen zumindest mittelbar über das erhärtete Materialvolumen aneinander und/oder an den Kanalinnenwänden fixiert. Ein einfaches, kontinuierliches Ausheben der Leitungen aus dem Kanal wird somit erschwert.

Die Lösung ist dahingehend vorteilhaft, als dass die Leitungssicherung mit geringem manuellem Einsatz und insbesondere größtenteils automatisch erfolgen kann. Es ist bevorzugt nicht erforderlich, zusätzliche mechanische Sicherungen vorzusehen (z.B. Befestigungsschellen), die die Leitungen in dem Kanal fixieren und die mit einem erheblichen Herstellaufwand verbunden wären. Im Gegensatz zu entsprechenden mechanischen Befestigungselementen ist das vorgeschlagene aushärtende Material auch nicht ohne Weiteres lösbar. Es ist vorteilhafterweise aber vorgesehen, dass das Material z.B. zu Reparaturzwecken wieder aufschmelzbar ist. Ein solches Aufschmelzen ist aber aus Sicht potentieller Straftäter (zeit-)aufwendig und erfordert den Einsatz spezieller Wärme-/ Energiequellen, insbesondere wenn Leitungen über eine große Länge entnommen werden sollen.

Um die Leitungen in dem Kanal zu sichern, kann es beispielsweise ausreichen, über eine gewisse Länge das aufgeschmolzene Material in den Kanal einzufüllen oder ein dort zunächst eingefülltes festes Material aufzuschmelzen. Hierfür können hierin noch geschilderte Anordnungen und insbesondere Wärme-/ Energiequellen entlang des Kanals verschoben werden, was einen geringen manuellen Aufwand bedeutet und/oder effizient maschinell unterstützbar oder umsetzbar ist.

Insbesondere wird ein Verfahren zum Sichern (insbesondere Befestigen oder Fixieren) von Leitungen (insbesondere elektrischer Kabel und ferner insbesondere Kupferkabel) einer Schienenverkehrsinfrastruktur vorgeschlagen. Wenigstens eine Leitung ist in einem Kanal angeordnet, der sich entlang eines Gleises erstreckt. Sowohl der Kanal als auch die Gleise können Bestandteil der Schienenverkehrsinfrastruktur sein. Das Verfahren umfasst:
- Bereitstellen wenigstens eines ersten aufgeschmolzenen kunststoffhaltigen Materialvolumens in dem Kanal, wobei das Materialvolumen die Leitung und bevorzugt auch den Kanal zumindest abschnittsweise kontaktiert;
- Aushärten des Materialvolumens und dadurch Sichern der Leitung in dem Kanal.

Wie hierin noch geschildert, kann das aufgeschmolzene Materialvolumen dadurch in dem Kanal bereitgestellt werden, dass ein zunächst zumindest teilweise festes Materialvolumen in den Kanal eingefüllt und dort sozusagen vor Ort geschmolzen wird. Alternativ kann ein bereits extern geschmolzenes Materialvolumen in den Kanal eingefüllt werden. Das Materialvolumen kann im geschmolzenen, aber bevorzugt auch im ausgehärteten Zustand die Leitung zumindest abschnittsweise umgeben (insbesondere eine Außenumfangsfläche hiervon) und/oder Innenwände des Kanals kontaktieren. Hierüber kann eine den Kanal und die Leitung aneinander und die Leitungen untereinander sichernde Verbindung geschaffen werden. Weiter wird die Leitung durch das Materialvolumen und die entstehenden Leitungsblöcke abschnittsweise beschwert, was deren Herausheben aus dem Kanal erschwert.

Das Aushärten des Materialvolumens umfasst nicht zwingend eine gesonderte Maßnahme oder eine gezielte Kühlung. Stattdessen kann das Aushärten auch dadurch erzielt werden, dass eine zuvor zum Aufschmelzen genutzte Wärme-/ Energiequelle entfernt wird und/oder dass das Materialvolumen nicht mehr gezielt erhitzt wird, um den geschmolzenen Zustand beizubehalten. Anders ausgedrückt kann das Aushärten des Materialvolumens also ein (insbesondere passives) Aushärtenlassen dieses Volumens umfassen, beispielsweise dadurch, dass das Materialvolumen der Außentemperatur ohne weitere Wärme-/ Energiezufuhr ausgesetzt wird.

Unter einem kunststoffhaltigen Materialvolumen kann auch verstanden werden, dass der Kunststoffgehalt 100 % beträgt. Es kann sich also um ein aufgeschmolzenes Kunststoffmaterial handeln. Insbesondere für eine bevorzugte Wiederaufschmelzbarkeit zu Reparaturzwecken haben sich als geeignete Kunststoffmaterialen die folgenden herausgestellt, die einzeln oder in beliebiger Kombination und insbesondere in einem beliebigen Mischungsverhältnis vorgesehen sein können: thermoplastisches Polyurethan (TPU), thermoplastisches Elastomer (TPE), Polylactide (PLA), Polyhydroxyalkanoate (PHA), z.B. in Form sogenannter Mulchfolien. Die beiden letztgenannten Varianten haben den Vorteil einer biologischen Abbaubarkeit bzw. Kompostierbarkeit. Auch können (teil-)rezyklierte Formen der voranstehenden Kunststoffmaterialien zum Einsatz kommen.

Ein Vorteil der Wiederaufschmelzbarkeit ergibt sich auch im Fall eines Rückbaus, da eine Leitungsentnahme ohne erhebliche Erschütterungen und Lärmentwicklungen möglich ist. Dies gilt insbesondere im Vergleich zu einem theoretisch möglichen Einformen der Leitungen in ausschließlich mechanisch zerstörbare und nicht-aufschmelzbare Materialien wie z.B. Beton.

Das hierin verwendete kunststoffhaltige Materialvolumen ist bevorzugt auch kompatibel zu Leitungskanälen aus oder zumindest umfassend Kunststoff (insbesondere glasfaserverstärkter Kunststoff oder Polypropylen-Copolymerisat oder Kunststoffrecyclaten) oder aus oder zumindest umfassend Metall (insbesondere Stahl(-blech)). Auch bei verbreiteten Betonkanälen ist das Materialvolumen aber einsetzbar. Die im flüssigen Kunststoff enthaltene Wäremeenergie führt nicht zu einer Beschädigung der Leitungen und/ oder Kanäle.

Allgemein kann die sichernde Wirkung der Leitung dadurch erzielt werden, dass diese durch das Materialvolumen beschwert wird und/oder schwer abzutransportierende und/oder schwer versteckbare Längen entstehen. Dies gilt insbesondere dann, wenn ein solches Materialvolumen über große Längen und/oder in regelmäßigen Abständen in den Kanal eingefüllt wird. Beispielsweise können in regelmäßigen Abständen Abschnitte des Kanals mit dem Materialvolumen gefüllt werden, wobei im Rahmen dieser Offenbarung hierunter nicht zwingend ein vollständiges Ausfüllen, sondern auch nur ein teilweises Auffüllen gemeint ist. Zum Erhöhen der Wirtschaftlichkeit sind die Abschnitte mit entsprechendem Materialvolumen vorzugsweise kürzer als die nicht-ausgefüllte Abschnitte des Kanals. Hierdurch wird zudem eine mit Brandschneisen vergleichbare Wirkung erzielt, da in den nicht ausgefüllten Bereichen weniger Material vorliegt, das als möglicher Brennstoff dienen kann. Beispielsweise kann alle 5 m ein Abschnitt von nicht mehr als 2 m und insbesondere maximal 1 m mit dem Materialvolumen befüllt werden. Weitere Varianten sind: Alle 10 m (wobei diese 10 m nicht ausgefüllt sind) einen mehr als 1 m und beispielsweise bis zu 2 m betragenden Abschnitt des Kanals mit Materialvolumen oder alle 15 m (die nicht ausgefüllt sind) einen Abschnitt von mehr als 2 m und insbesondere bis zu 3 m mit Materialvolumen. Nicht ausgefüllte Abschnitte können sich auch durch örtliche Situationen (z.B. Aus- und Einfädelungen in den Kabelkanal) ergeben, umgekehrt können diese Örtlichkeiten auch gerade zusätzliche Befüllungen erfordern.

Es ist bevorzugt vorgesehen, dass das Materialvolumen die Leitungen und die Kanalinnenwände miteinander verbindet und beispielsweise über dort entstehende Haftkräfte und/oder Reibkräfte ein Herausheben der Leitung aus dem Kanal gewichts- und zeitmäßig erschwert. Besonders vorteilhaft ist es jedoch, wenn, wie allgemein üblich, eine Mehrzahl von Leitungen in dem Kanal angeordnet ist und das Materialvolumen (spätestens) nach dem Aushärten die Leitungen zumindest abschnittsweise miteinander verbindet. Neben der zumindest mittelbaren Anhaftung bzw. Verbindung mit den Kanalinnenwänden über das Materialvolumen werden die Leitungen dann auch aneinander gesichert und sind insbesondere relativ zueinander unbeweglich durch das Materialvolumen festgelegt. Insbesondere wenn das Materialvolumen über eine Kanallänge von 1 m oder mehr eingefüllt wird, hat es sich gezeigt, dass dies die Entnahme der Leitungen aus dem Kanal erheblich erschwert. Neben dem zusätzlichen Gewicht durch das Kunststoffmaterial ist hierfür die fehlende Flexibilität der Kabel verantwortlich. Selbst nach der Entnahme ist es aus Sicht potentieller Diebe aufwendig und gegebenenfalls nicht lohnend, das Materialvolumen wieder aufzuschmelzen. Somit wird der Diebstahl bzw. die Entnahme der Leitungen aus dem Kanal erschwert und aus Diebessicht unattraktiv.

Prinzipiell kann vorgesehen sein, dass das initial bereitgestellte Materialvolumen das einzige Materialvolumen zur Leitungssicherung ist. Beispielsweise kann eine entsprechende Menge an geschmolzenem Materialvolumen oder zunächst festem und dann in dem Kanal aufgeschmolzenem Materialvolumen in den Kanal eingefüllt werden. Es ist aber ebenso möglich, sukzessive einzelne (Teil-)Materialvolumina in den Kanal einzufüllen. Diese können dort schichtenbildend und somit schichtartig bereitgestellt werden. Folglich sieht eine Weiterbildung vor, dass wenigstens ein weiteres aufgeschmolzenes Materialvolumen bereitgestellt wird, wobei die Mehrzahl der Materialvolumina (also zumindest das erste und das weitere Materialvolumen) aufeinanderfolgend und schichtartig in demselben Abschnitt des Kanals bereitgestellt werden. Die Materialvolumina können zeitlich aufeinanderfolgend eingefüllt und/oder aufgeschmolzen werden. Bevorzugt stehen sie dabei in Kontakt und/oder bilden eine Abfolge einzelner Materialschichten. Beispielsweise kann das weitere Materialvolumen erst dann eingefüllt werden, wenn das zunächst eingefüllte Materialvolumen bereits zumindest teilweise ausgehärtet ist. Das weitere Materialvolumen wird sich dann spätestens bei dessen Aufschmelzen entlang des zuvor bereitgestellten Materialvolumens verteilen und (insbesondere entlang einer Höhenachse betrachtet) auf bzw. oberhalb von und in Kontakt mit diesem eine weitere Materialschicht ausbilden. Es versteht sich, dass auch noch ein drittes oder viertes Materialvolumen (oder auch eine beliebige weitere Anzahl) bereitgestellt werden können und dadurch entsprechend dritte oder vierte (oder beliebige weitere Anzahlen) von Schichten erzeugt werden können.

Dies hat den Vorteil eines reduzierten Wärmeeintrags pro Zeiteinheit im Vergleich zum gleichzeitigen Einfüllen sämtlicher Materialvolumina in den Kanal. Dies reduziert die Beschädigungsgefahr der Leitungen, insbesondere da hohe Temperaturen in unmittelbarer Nähe der Leitungen potentiell schneller abgebaut werden können. Auch können zunächst eingefüllte Materialvolumina insbesondere nach deren Aushärten wärmeisolierend wirken, wenn anschließend darauf noch eine weitere Materialschicht aufgetragen wird. Auch hierdurch wird ein erhöhter und/oder langandauernder Wärmeeintrag in die Leitungen verhindert. Auch können die Lagen unterschiedliche Charakteristika aufweisen, um Elastizitäten zu variieren, Trennschichten auszubilden, Sichtschutze zu erreichen oder Markerdepots zu generieren. Unter einem Markerdepot kann ein Bereich verstanden werden, in dem ein vorbestimmter Marker (oder allgemein ein Informationsträger) zum Bereithalten von Informationen zum Beispiel zu einer Zusammensetzung oder einem Herstelldatum des Materialvolumens bereitstellbar ist oder das durch Aufbrechen wenigstens eines Markers derartige Informationen abgibt. Die Marker können farblich sein oder Signale aussenden ( z.B. durch Änderungen des Widerstands durch z.B. in die Schichten eingelegte Marker und/oder deren Materialien).

Entsprechend sieht eine Weiterbildung vor, dass das weitere aufgeschmolzene Materialvolumen erst dann bereitgestellt wird, wenn das erste Materialvolumen zumindest teilweise ausgehärtet ist.

Wie erwähnt, kann erfindungsgemäß vorgesehen sein, dass zumindest das erste Materialvolumen außerhalb des Kanals aufgeschmolzen und anschließend in den Kanal eingefüllt wird. Dies ermöglicht eine schnelle Herstellung der Sicherung im Vergleich zum Einfüllen von festem Material und Aufschmelzen erst in dem Kanal. Möglichkeiten zum externen Aufschmelzen werden nachstehend noch genannt.

Eine alternative Variante sieht vor, dass zumindest das erste Materialvolumen in einem zumindest teilweise (und insbesondere überwiegend) festen Zustand in den Kanal eingefüllt und erst anschließend dort aufgeschmolzen wird. Dies ermöglicht eine insbesondere manuell einfach handzuhabende Dosierbarkeit und verringerte Verletzungsrisiken gegenüber einem direkten Einfüllen des bereits aufgeschmolzenen Materials. In diesem Zusammenhang kann vorgesehen sein, dass das (erste) Materialvolumen in dem festen Zustand folienartig ist oder zumindest feste Partikel (oder auch feste Bestandteile) umfasst oder daraus besteht. Unter einem folienartigen Material kann verstanden werden, dass eine feste Materialschicht bereitgestellt wird, die jedoch deformierbar ist, insbesondere unter Eigengewicht. Prinzipiell ist es aber auch möglich, plattenförmige (d.h. starre) Materialvolumen bereitzustellen. Das entsprechend feste Materialvolumen kann auf die wenigstens eine Leitung aufgelegt und dann geschmolzen werden, wofür jegliche hierin erläuterte Wärmequelle zum Einsatz kommen kann.

Die Partikel können insbesondere kugelförmig sein. Dies ermöglicht eine hohe Packdichte an festem Material nahe der wenigstens einen Leitung. Insbesondere können Kunststoffkugeln als feste Partikel bereitgestellt und in den Kanal eingefüllt werden.

Eine Weiterbildung sieht vor, dass der Kanal vor dem Bereitstellen des zumindest ersten Materialvolumens zumindest abschnittsweise vorgewärmt und/oder per Luftstrom gesäubert wird. Dies betrifft vorteilhafterweise diejenigen Kanalabschnitte, in denen das Materialvolumen bereitgestellt werden soll. Für das Vorwärmen kann eine andere Wärmequelle verwendet werden als für das Aufschmelzen des Materials. Prinzipiell kann jedoch z.B. durch mehrfaches Abfahren des Kanals bzw. des entsprechenden Abschnitts die Wärmequelle zunächst verwendet werden, um den Kanal vorzuwärmen, und danach, um dort z.B. in zunächst festem Zustand bereitgestelltes Material aufzuschmelzen.

Durch das Vorwärmen können Temperaturdifferenzen beim Einfüllen eines bereits aufgeschmolzenen Materials abgebaut werden, die sonst zu Beschädigungen des Kanals und/oder der Leitungen führen könnten, insbesondere bei Nichtbetonmaterialien des Kanals. Ebenso kann hierdurch der Aufschmelzprozess beschleunigt werden, als wenn zunächst festes Material in dem Kanal bereitgestellt und dort dann aufgeschmolzen wird. Dies gilt insbesondere bei Kabelkanalmaterialien mit hoher Wärmeleitfähigkeit wie z.B. Stahl im Gegensatz zu wenig wärmeleitfähigen Materialien, wie z.B. Kunststoff oder Beton. Durch das Säubern des Kanals wird die Anhaftung des Materials an den Leitungen und/oder den Kanalinnenwänden verbessert. Bei dem Luftstrom kann es sich insbesondere um einen Druckluftstrom handeln, der Verschmutzungen aus dem Kanal ausbläst. Prinzipiell ist aber ebenso ein Unterdruckstrom möglich, mittels dem Verschmutzungen aus dem Kanal abgesaugt und von Feinstäuben befreit werden. Letzteres dient sogleich der weiteren Erhöhung der Arbeitssicherheit, da der Anteil des gesamten einatembaren Staubes (Gesamtstaub) im Rahmen des Erstellungsprozesses reduziert wird.

Gemäß einer weiteren Variante ist das ausgehärtete Materialvolumen beispielsweise für eine Reparatur der Leitung wieder aufschmelzbar. Dies kann insbesondere durch Verwenden jeglicher der hierin genannten Materialbeispiele erreicht werden. Durch die Aufschmelzbarkeit, die bevorzugt auch mit einer entsprechenden Wiederaushärtefähigkeit einhergeht, kann nachträglich Zugang zu den Leitungen erlangt werden, beispielsweise um diese zu ersetzen oder zu warten. Für das Aufschmelzen können beliebige Wärmequellen eingesetzt werden, insbesondere UV- oder Heizstrahler.

Eine weitere bevorzugte Variante sieht vor, dass das aufgeschmolzene Materialvolumen aufgeschäumt wird. Hierunter kann verstanden werden, dass Gas (z.B. Kohlenstoffdioxid) in das Materialvolumen eingebracht wird. Auf diese Weise kann das Volumen erhöht werden und kann zum Ausfüllen eines bestimmen Raumes weniger kunststoffhaltiges Material erforderlich sein. Ebenso ist es möglich, zusätzlich zu Kunststoffanteilen auch nicht-Kunststoffanteile vorzusehen, was ebenfalls die Wirtschaftlichkeit verbessern kann. Diese Anteile können z.B. Kreide oder Talkum sein, um die Menge an Kunststoff-Einsatzstoffen zu verringern. Das Materialvolumen kann sich somit zusätzlich zum eigentlichen Hauptmaterial (z.B. Kunststoff, Polyurethan) aus weiteren Materialien, wie zum Beispiel Kohlenstoffdioxid, sowie den optionalen Zusatzanteilen zusammensetzen.

Eine weitere bevorzugte Variante sieht vor, einen (anders-) farbigen Bestandteil in dem Material bereitzustellen. Hierunter kann verstanden werden, dass sich die Farbe dieses Anteils von der Farbe des übrigen Materialvolumens unterscheidet und insbesondere nicht-transparent ist. Der Anteil dieses farbigen Bestandteils kann weniger als 10 % und vorzugsweise weniger als 5 % betragen (beispielsweise 2 % bis 3 %). Hierdurch kann das Material als geeignetes Material z.B. für Reparaturzwecke markiert werden. Es kann auch vorgesehen sein, dass der farbige Bestandteil eine andere Schmelztemperatur als das übrige Materialvolumen aufweist und insbesondere bei erwarteten Außentemperaturen und/oder bei einem ansonsten ausgehärteten Materialvolumen weniger fest oder auch flüssig ist. Dann kann bei einem Aufbrechen des ausgehärteten Materialvolumens, wie es im Fall eines Diebstahls zu erwarten ist, der farbige Bestandteil auslaufen und für den Diebstahl verwendete Werkzeuge oder den Diebstahl ausführende Personen markieren. Zusätzlich oder alternativ kann ein Bestandteil im Material bereitgestellt sein, der bei einem unkontrollierten Aufbrechen Pfeffergase freisetzt.

Gemäß einer bevorzugten Ausführungsform kann in das Materialvolumen eine (vorzugsweise spätestens nach einem Erstarren versteifende oder stützende, bevorzugt aber nicht schmelzbare) Struktur eingebracht und insbesondere eingeformt sein oder werden. Beispielsweise kann die Struktur ein Gewebe sein oder umfassen. Ebenso kann die Struktur eine Anordnung von Schellen umfassen, die mit dem Kanal verbunden sind und die in das Material eingeformt werden. Gemäß einer Variante kann die Struktur, insbesondere wenn sie ein Gewebe ist oder langgestreckte und/oder flexible Elemente wie z.B. Längsfasern aufweist, durch nicht ausgefüllte Bereich des Kanals hindurch verlaufen. Hierdurch kann eine langgestreckte und/oder unendliche (ggf. abschnittsweise flexible) Struktur bereitgestellt werden, die durch den Kanal hindurch und von Materialvolumen zu Materialvolumen verläuft.

Die Struktur ist bevorzugt fest und wird als solche in den Kanal eingelegt. Bei Aufschmelzen des Materials oder Einfüllen von bereits geschmolzenem Material bleibt die Struktur bevorzugt fest und wird in das erstarrende Material eingeformt.

Gemäß einer Weiterbildung des Verfahrens ist wenigstens eine Fließsperre bereitgestellt, die dazu eingerichtet ist, eine Ausbreitung des aufgeschmolzenen Materialvolumens entlang des Kanals oder in Kabelkanalabzweigungen zu begrenzen. Bei der Fließsperre kann es sich z.B. um ein plattenartiges Bauteil handeln, das quer zur Kabellängsrichtung in diesen eingeschoben wird und/oder längs zur Kabelrichtung abdichtet. Es kann Öffnungen oder Ausnehmungen umfassen, durch die die wenigstens eine Leitung führbar ist. Diese Ausnehmung kann an wenigstens einer Seite geöffnet sein bzw. einen geöffneten Randbereich der Fließsperre bilden, sodass die Fließsperre sozusagen von oben auf eine in dem Kabel befindliche Leitung aufschiebbar ist. Auch kann vorgesehen werden, dass diese Fließsperre eine maximal gewünschte Einfüllhöhe des einzubringenden Materials anzeigt, um hierdurch einen effizienteren Verbrauch und eine höhere Wirtschaftlichkeit zu erlangen. Die Fließsperre kann dichtend wirken und ein Fließen des Materials an der Fließsperre vorbei verhindern. Sie kann aber auch lediglich verbleibende Zwischenräume zu den Kanalinnenwänden und/oder der Leitung derart verringern, dass nur geringe Mengen an aufgeschmolzenem Material an der Fließsperre vorbeifließen können. Diese können dann entsprechend schnell aushärten und ein Nachfließen von weiterem Material verhindern. Mittels der Fließsperre kann zielgerichtet vorgegeben werden, welche Abschnitte des Kanals mit dem aufgeschmolzenen Material und bevorzugt auch bis zu welcher Höhe aufzufüllen sind.

Die Erfindung betrifft auch eine Anordnung zum Sichern wenigstens einer Leitung einer Schienenverkehrsinfrastruktur, wobei die Leitung in einem Kanal angeordnet ist, der sich entlang eines Gleises erstreckt, und wobei die Anordnung umfasst:
- einen Materialspeicher zur Bevorratung eines kunststoffhaltigen Materials;
- wenigstens eine erste Wärme-/ Energiequelle zum Aufschmelzen (wobei Aufschmelzen hierin allgemein nicht zwangsläufig das Erreichen eines flüssigen Zustands bedeuten muss, sondern auch das Erzeugen eines gallertartigen Zustands betreffen kann) des Materials (z.B. in der Anordnung oder in dem Kanal);
- einen Auslassbereich, der über dem Kanal anordenbar ist und mittels dem das Material (z.B. in festem oder geschmolzenem Zustand) aus der Anordnung in den Kanal führbar (und/oder einfüllbar) ist.

Allgemein kann die Anordnung jegliche Weiterbildungen und jeglichen Aspekt umfassen, der im Zusammenhang mit dem Verfahren geschildert wurde. Entsprechend können sich auch sämtliche im Zusammenhang mit dem Verfahren erläuterte Weiterbildungen und Varianten von gleichen oder gleichwirkenden Verfahrensmerkmalen auch auf entsprechende Anordnungsmerkmale beziehen bzw. für diese Gültigkeit besitzen.

Der Materialspeicher kann das Material bevorzugt in einem festen Zustand bevorraten. Beispielsweise kann es sich um einen Speicher zur Aufnahme fester Kunststoffpartikel und insbesondere Kunststoffkugeln handeln und/oder von einem Kunststoffgranulat. Ist das Material folienartig, kann der Materialspeicher die entsprechende Folie z.B. in Form einer Rolle aufnehmen.

Die Wärmequelle kann das Material in der Anordnung aufschmelzen und/oder nachdem das Material in den Kanal eingefüllt wurde. In dem erstgenannten Fall ist die Wärmequelle bevorzugt derart innerhalb der Anordnung positioniert, dass sie auf eine von dem Materialspeicher entnommenen Materialmenge einwirken kann. Die Wärmequelle kann dabei in einer Schmelzeinrichtung verbaut bzw. von einer solchen umfasst sein, wofür nachstehend noch Beispiele genannt werden, wie insbesondere eine Extrusionsanordnung.

Für den Fall, dass mit der Wärmequelle in den Kanal eingefülltes festes Material aufgeschmolzen werden soll, ist die Wärmequelle bevorzugt gegenüberliegend zu dem Kanal positionierbar.

Wenn festes Material in den Kanal eingefüllt wird, ist der Auslassbereich bevorzugt mit dem Materialspeicher verbunden bzw. erhält von diesem feste Materialmengen. Soll hingegen bereits aufgeschmolzenes Material in den Kanal eingefüllt werden, wird dem Auslassbereich bevorzugt durch die erste Wärmequelle aufgeschmolzenes Material zugeführt. Der Auslassbereich kann insbesondere eine Öffnung eines materialführenden Kanals oder einer materialführenden Leitung umfassen.

Wie nachstehend noch erläutert, kann die Anordnung allgemein relativ zu dem Kanal beweglich sein. Insbesondere kann sie entlang des Kanals verschiebbar sein. Dies kann manuell durch Aufbringen entsprechender Schubkräfte erfolgen. Hierfür weist die Anordnung bevorzugt Rollen auf, mit denen sie sich an einem Untergrund und/oder auf den Kanalaußenwänden abstützt bzw. durch diese geführt wird. Ein Kanal kann auch auf Stelzen gebaut sein und dadurch oberhalb des umgebenden Geländes liegen. Gemäß einer Variante ist die Vorrichtung auf dem Gleis geführt. Insbesondere in diesem Fall wird sie bevorzugt motorisch bewegt, beispielsweise durch einen Triebwagen oder eine Lokomotive. Insbesondere kann die Anordnung dann an wenigstens einem Wagon angeordnet oder von einem solchen umfasst sein, der entlang der Gleise bewegbar ist. Ferner ist in diesem Fall der Auslassbereich bevorzugt bewegbar, sodass er über dem Kanal positionierbar ist. Hierfür kann er an einem ausschwenkbaren oder ausfahrbaren Arm angeordnet sein, der in variablen Abständen von z.B. einem die Anordnung umfassenden Wagon positionierbar ist. Beispielsweise können Schwenkarme vorgesehen sein, an denen der Auslassbereich angeordnet ist, und/oder verschwenkbare Materialrutschen. Auch kann eine z.B. von einem Kran oder Bagger oberhalb des Kanals positionerbare Anordnung vorgesehen sein.

Prinzipiell ist es aber auch möglich, dass die Anordnung ohne Abstützung am Untergrund und dann bevorzugt manuell führbar und/oder manuell tragbar ist. Hierdurch können beispielsweise kleinere Reparaturarbeiten ausgeführt werden. Die Wärmequelle ist dann bevorzugt in einer Art Schmelzpistole oder Schmelzkartusche verbaut, mittels derer vergleichsweise geringe Materialvolumen aufgeschmolzen und in geschmolzenem Zustand in den Kanal (schwerpunktmäßig) einführbar sind. Auch bei manuell geführten Anordnungen ist es aber möglich, zunächst festes Material in den Kanal zu füllen und dann beispielsweise mittels einer manuell führbaren Wärmequelle (insbesondere einem Heizstrahler, Infrarotstrahler, Mikrowellengenerator oder einem Heißluftfön) das Material aufzuschmelzen.

Gemäß einer Weiterbildung umfasst die Anordnung auch wenigstens eine weitere Wärmequelle zum Vorwärmen des Kanals, bevor das Material dort eingefüllt wird. Damit einhergehende Vorteile wurden vorstehend genannt. Die Wärmequelle kann in einer Vorwärtsfahrrichtung relativ zu bzw. entlang des Kanals betrachtet vor dem Auslassbereich und/oder der ersten Wärmequelle positioniert sein. Hierdurch wird ermöglicht, dass die Wärmequelle tatsächlich Kanalabschnitte vorwärmen kann, die erst anschließend mit Material aus dem Auslassabschnitt befüllt werden und/oder in denen das eingefüllte Material dann aufgeschmolzen werden soll.

Zusätzlich oder alternativ kann die Anordnung eine Reinigungseinrichtung umfassen (insbesondere eine Luftdüse), die dazu eingerichtet ist, einen in den Kanal gerichteten Luftstrom zu erzeugen. Hierfür kommen sowohl druckluft- als auch sauglufterzeugende Reinigungsreinrichtungen in Betracht.

Ferner zusätzlich oder alternativ kann die Anordnung eine Abschirmung umfassen, die über dem Kanal positionierbar ist, um diesen zumindest teilweise von Umgebungseinflüssen abzuschirmen und Arbeitsgeräusche zu minimieren. Vorzugsweise ist die Abschirmung dazu eingerichtet, denjenigen Abschnitt abzuschirmen, der mittels einer der genannten Wärmequellen aufgewärmt wird oder der mit der Reinigungseinrichtung gesäubert werden soll. Insbesondere findet die Abschirmung bevorzugt für einen Bereich statt, der dem Auslassbereich der Anordnung gegenüberliegt. Beispielsweise kann sich die Abschirmung gegenüberliegend zu und entlang des Kanals erstrecken. Zwischen der Abschirmung und dem Kanal können die genannte Reinigungseinrichtung, wenigstens eine der Wärmequellen und/oder der Auslassbereich angeordnet sein.

Wie erwähnt, ist die Anordnung vorzugsweise entlang des Kanals verschiebbar. Dies kann aus eigener (insbesondere motorischer) Kraft erfolgen oder per manuell oder motorisch erzeugter Fortbewegungskraft, die auf die Anordnung übertragen wird.

Ebenso sieht eine Ausführungsform vor, dass die Anordnung zumindest teilweise an wenigstens einem Schienenfahrzeug angeordnet ist (oder von einem Schienenfahrzeug umfasst ist), das auf dem Gleis entlang des Kanals positionierbar und/oder verfahrbar ist.

Bei dem Schienenfahrzeug kann es sich um ein einzelnes angetriebenes Fahrzeug (Triebfahrzeug) oder um einen angekuppelten Wagen oder um einen Verbund handeln.

Gemäß einer Variante ist die Wärmequelle von einer der folgenden Einheiten und/oder Einrichtungen der Anordnung umfasst, die jeweils Beispiele für hierin erwähnte Schmelzeinrichtungen sind:
- einer Extrudereinheit
- einem Fassschmelzer
- einer Schmelztiegeleinrichtung.

Unter der Schmelztiegeleinrichtung kann insbesondere eine erhitzbare Aufnahmevorrichtung für festes Material verstanden werden. Derartige Einrichtungen sind z.B. in Form sogenannter Bitumenkocher bekannt und können für das Aufschmelzen des kunststoffhaltigen Materials hinsichtlich bereitstellbarer Temperaturen abgewandelt werden. Ebenso möglich ist es auch, als erste Wärmequelle ein Tiefeninduktionsgerät zu verwenden. Dieses kann beispielsweise mit einer metallischen und/oder magnetischen Aufnahmevorrichtung für festes Material zusammenwirken bzw. diese erhitzen.

Ausführungsbeispiele der Erfindung werden im Folgenden anhand der beigefügten schematischen Figuren erläutert. Gleichartige oder gleichwirkende Merkmale können figurenübergreifend mit den gleichen Bezugszeichen versehen sein.
- Fig. 1 bis 3: zeigen eine Querschnittsansicht eines Kanals mit darin aufgenommenen Leitungen in verschiedenen Verfahrenszuständen.
- Fig. 4: zeigt ein Ablaufschema zum Erläutern verschiedener erfindungsgemäßer Verfahrensabläufe.
- Fig. 5: zeigt eine Anordnung gemäß einem Ausführungsbeispiel der Erfindung.
- Fig. 6 und 7: zeigen alternative Ausführungsbeispiele einer erfindungsgemäßen Anordnung.

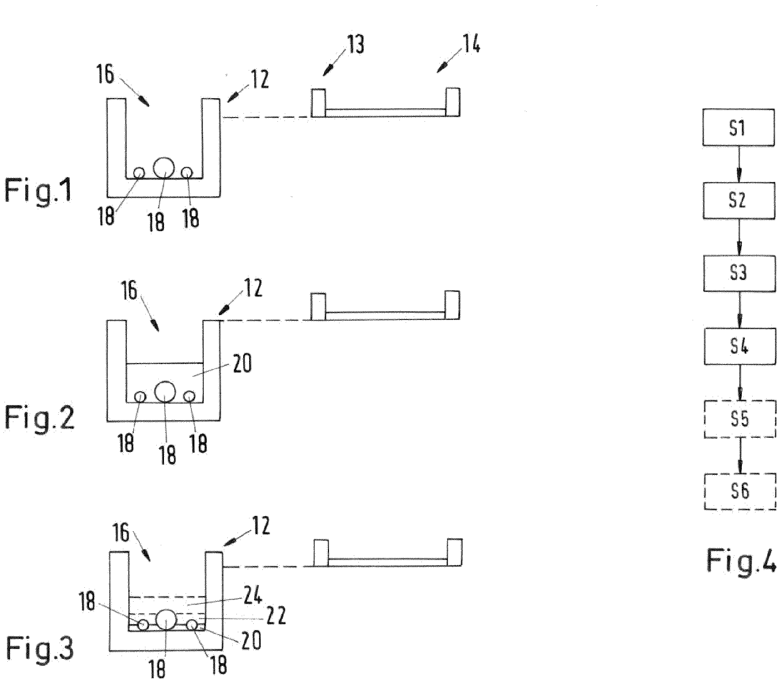

In Fig. 1 ist eine Querschnittsansicht eines nach oben offenen Kanals 12 gezeigt, der Bestandteil einer Schienenverkehrsinfrastruktur 13 ist und sich entlang eines ebenfalls in Querschnittsansicht und schematisch stark vereinfacht abgebildeten Gleises 14 erstreckt. Die Größenverhältnisse der Schienenverkehrsinfrastruktur 13 und insbesondere des Gleises 14 im Vergleich zum Kanal 12 sind nicht repräsentativ und schematisch stark vereinfacht.

Der Kanal 12 weist einen wannenartigen, einseitig offenen Querschnitt auf. Er begrenzt somit einen Innenraum 16 an zumindest drei Seiten, kann aber zur Verteilung von Kabeln auch seitliche Aus- und Einführungsöffnungen aufweisen und/oder von unten kommende Zuführungen. Die nach oben hin offene Seite des Kanals 12 kann durch eine nicht dargestellte Deckeleinrichtung verschlossen werden. Diese ist bevorzugt manuell anhebbar, d.h. auf den Kanal 12 auf- oder in diesen eingelegt.

In dem Innenraum des Kanals 12 sind elektrische Leitungen 18 positioniert in Form von isolierten Kupferkabeln. Lediglich beispielhaft beträgt die Anzahl der Leitungen drei. Es könnten auch weniger und insbesondere nur eine einzige Leitung 18, aber auch eine gegenüber Fig. 1 größere Anzahl an Leitungen 18 vorgesehen sein. Die Leitungen 18 sind wiederum in Querschnittansicht gezeigt. Die Längsachse des Kanals 12, aber auch der Leitungen 18 verläuft jeweils senkrecht auf der Blattebene.

In Fig. 2 ist ein Zustand gezeigt, in dem ein aufgeschmolzenes flüssiges Materialvolumen 20 in den Innenraum 16 des Kanals 12 eingefüllt wurde. Das Materialvolumen 20 ist derart bemessen, dass es sämtliche Leitungen 18 kontaktiert und insbesondere abschnittsweise umschließt. Weiter liegt es an den Innenwänden des Kanals 16 an. Härtet das Materialvolumen 20 aus, sind die Leitungen 18 über das gehärtete Material miteinander verbunden. Weiter werden aber auch Haft- und/oder Reibungskräfte zur Innenwand des Kanals 20 erzeugt. Je nach der gewählten Länge der Leitungen 18 bzw. des Kanals 12, über die sich das entsprechende Materialvolumen 20 erstreckt, kann folglich das Herausheben und auch Durchtrennen der Leitungen 18 signifikant erschwert werden. Die damit einhergehenden Zeitverluste können Diebe davon abhalten, die Leitungen 18 aus dem Kanal 12 zu entnehmen.

Darauf hinzuweisen ist, dass der Zustand aus Fig. 2 dadurch erzielt werden kann, dass das Material 20 im bereits geschmolzenen Zustand in den Kanal 12 eingefüllt wird. Ebenso ist es aber möglich, das Material 20 in zunächst fester Form und insbesondere als Kunststoffgranulat oder als Menge von kugelförmigen Kunststoffpartikeln in den Kanal 12 einzufüllen und dort dann aufzuschmelzen.

In Fig. 3 ist eine Variante gezeigt, bei der mehrere Materialvolumina bzw. Materialschichten 20-24 aufeinanderfolgend und übereinander in den Innenraum 16 des Kanals 12 eingefüllt worden sind. Hierbei wird bevorzugt eine vergleichsweise geringe Menge je Schicht verwendet, um den Wärmeeintrag je Schicht zu begrenzen. So reicht z.B. das erste Materialvolumen 20 nicht aus, um die kleiner dimensionierten Leitungen 18 vollständig zu bedecken und/oder allgemein die Leitungen 18 in der gewünschten Weise in dem Kanal 12 zu sichern. Erneut können die die Schichten bildendenden Materialvolumen 20-24 in geschmolzener Form eingefüllt werden oder in zunächst fester und dann im Innenraum 16 aufgeschmolzener Form. Es ist bevorzugt, dass vor dem Einfüllen einer nächsten Schicht die vorangehende Schicht bereits zumindest teilweise ausgehärtet ist. Dann kann diese wärmeisolierend wirken. Dies gilt z.B. für die mittlere Schicht 22, die zumindest die kleiner dimensionierten Leitungen 18 gegenüber Wärmeeinträgen der obersten Schicht 24 zusätzlich isoliert.

Die vorstehend anhand der Fig. 1 bis 3 diskutierten Varianten werden im Folgenden teilweise noch einmal anhand des Ablaufschemas von Fig. 3 erläutert. Dabei wird zunächst von dem Einfüllen geschmolzener Materialvolumina 20-24 ausgegangen.

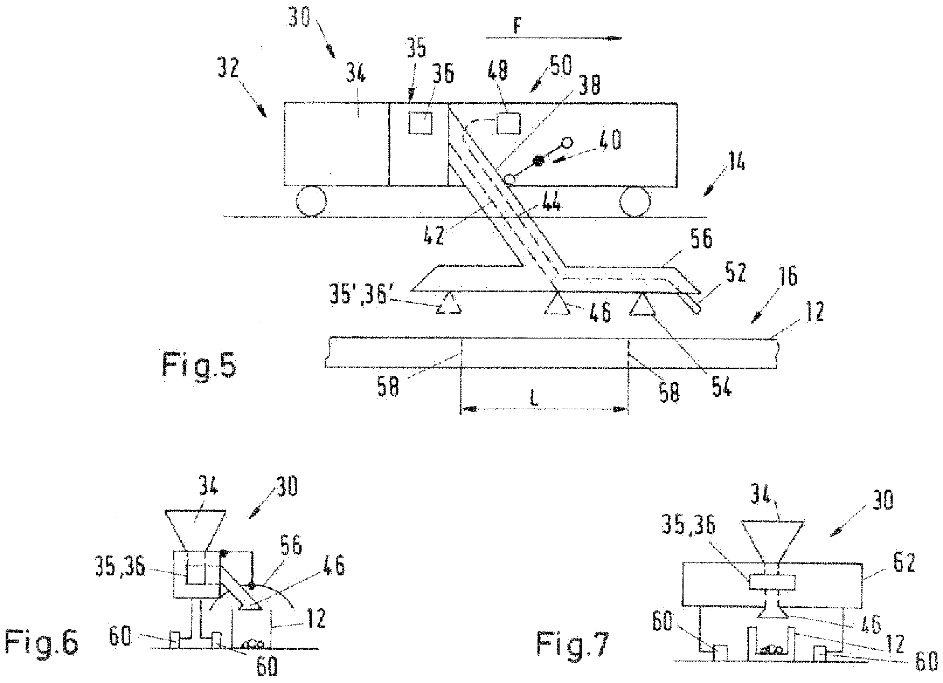

In einem optionalen Schritt S1 wird der Innenraum 16 des Kanals 12 gereinigt, wofür eine Reinigungseinrichtung der vorstehend allgemein erläuterten und nachstehend anhand von Fig. 5 gezeigten Art verwendet werden kann. Diese kann insbesondere den Kanalinnenraum 16 ausblasen oder aussaugen.

In einem ebenso optionalen Schritt S2 wird der Kanal 12 bzw. der Abschnitt, in dem danach ein Materialvolumen bereitgestellt werden soll, vorgewärmt. Die Schritte S2 und S1 können auch in umgekehrter Reihenfolge oder zumindest teilweise zeitlich überlappend ausgeführt werden. Vorzugsweise ist der Kanal 12 oder zumindest der Abschnitt, in dem das Material eingefüllt werden soll, während beider Schritte S1, S2 gegenüber der Umgebung abgeschirmt. Hierunter kann insbesondere verstanden werden, dass eine Abschirmung der nachstehend anhand von Fig. 5 erläuterten Art gegenüberliegend zu der offenen Seite des Kanals 12 positioniert wird.

Im Schritt S3 wird ein geschmolzenes Materialvolumen 20 in den Innenraum des Kanals 16 eingefüllt. Im Schritt S4 wird dieses Materialvolumen 20 ausgehärtet. Dies kann z.B. durch eine Kühlvorrichtung, die beispielsweise einen kühlenden Luftstrom auf das Materialvolumen 20 richtet, unterstützt werden. Alternativ kann dies auch durch Entfernen von Wärmequellen oder dergleichen oder schlicht dem Belassen des Materialvolumens 20 unter Einfluss der Umgebung in dem Kanal 12 erzielt werden. Falls das Materialvolumen 20 derart bemessen ist, dass es lediglich eine einzelne Schicht aus einer Mehrzahl von Schichten bildet (siehe Variante von Fig. 3), kann im ferner optionalen Schritt S5 anschließend das nächste darauffolgende Materialvolumen 22 in den Kanal 16 und auf das bevorzugt erhärtete erste Materialvolumen 20 gefüllt werden. In einem ebenso optionalen Schritt S6 kann dieses weitere Materialvolumen 22 dann analog zum Schritt S4 aushärten. Weitere Schichten, beispielsweise die Schicht 24 aus Fig. 3, können danach analog hergestellt werden.

In dem Fall, dass festes Material in den Kanal 12 eingefüllt und dort dann aufgeschmolzen wird, könnte ein alternativer Ablauf des Verfahrens gemäß Fig. 4 auch wie folgt lauten: Die optionalen Schritte S1 und/oder S2 können beibehalten werden. Im Schritt S3 wird ein Materialvolumen 20 im festen Zustand eingefüllt. Dieses wird dann im Schritt S4 aufgeschmolzen, insbesondere durch Positionieren einer Wärmequelle gegenüberliegend zum Kanal 12. Nach einem bevorzugten Aushärten können, sofern noch weitere Schichten hergestellt werden sollen, in den Schritten S5 und S6 weitere feste Materialvolumen 22, 24 auf die erhärtete Schicht 20 zum Aufschmelzen und Aushärten aufgebracht werden.

In Fig. 5 ist eine Anordnung 30 gemäß einem schematisch stark vereinfachten Ausführungsbeispiel der Erfindung gezeigt. Erneut sind die Größenverhältnisse in Fig. 5 schematisch stark vereinfacht und nicht repräsentativ. Im Vergleich zu den Fig. 1 bis 3 ist die Blickachse um 90° gedreht, sodass man nun seitlich auf den Kanal 12 und das Gleis 14 blickt. Lediglich aus Darstellungsgründen ist der Kanal 12 und sind die Gleise 14 in einem vertikalen Abstand voneinander dargestellt, der in der Realität nicht zwingend ist und/oder vergleichsweise gering ausfallen kann.

Die Anordnung 30 ist auf bzw. in einem Schienenfahrzeug 32 angeordnet. Das Schienenfahrzeug 32 ist beispielhaft ein Wagon, der mit einer nicht dargestellten Triebeinheit, wie z.B. einem Zwei-Wege-Bagger, gekoppelt ist. Die Anordnung 30 könnte prinzipiell auch auf mehrere Wagons verteilt sein.

Die Anordnung 30 weist einen Materialspeicher 34 auf, in dem das einzufüllende Material in bevorzugt fester Form und z.B. als Kunststoffgranulat oder Kunststoffkugelmenge bevorratet ist. Die Anordnung 30 weist auch eine Wärmequelle 36 auf, die von einer Schmelzeinrichtung 35 umfasst ist. Beispiele der Schmelzeinrichtung 35 wurden vorstehend genannt. In dem gezeigten Fall kann insbesondere ein Extruder umfassend die Wärmequelle 36 vorgesehen sein. Nicht gesondert gezeigt, aber dennoch vorgesehen, ist eine materialleitende Verbindung zwischen dem Materialspeicher 34 und der Schmelzeinrichtung 35. Wenn die Anordnung 30 auf mehrere Wagons bzw. Schienenfahrzeuge 32 verteilt ist, können insbesondere der Materialspeicher 34 und die Schmelzeinrichtung 35 auf unterschiedlichen Wagons angeordnet sein.

Gezeigt ist ferner ein optionaler kranartiger Arm 38, der sich von dem Wagon 32 zu und genauer gesagt bis oberhalb von dem Kanal 12 erstreckt. Der Arm 38 ist über eine optionale gelenkige Verbindung 40 zusätzlich an dem Wagon 32 gesichert. In oder an dem Arm 38 verlaufen verschiedene nachstehend erläuterte Leitungen 42, 44.

Eine erste Leitung 44 ist eine Materialleitung, um von der Schmelzeinrichtung 35 aufgeschmolzene Materialvolumen zu einem Auslassbereich 46 der Anordnung 30 zu fördern. Der Auslassbereich 46 ist lediglich beispielhaft als eine Art Stutzen ausgebildet. Dieser wird gegenüberliegend zu dem Kanal 12 und genauer gesagt dessen geöffneter Oberseite positioniert, sodass das flüssige bzw. geschmolzene Kunststoffmaterial aus dem Auslassbereich 36 hinaus und in den Kanal 12 hineinfließen kann. Dann kann es sich analog zu Fig. 2 oder Fig. 3 als eine von mehreren Schichten oder als Einzelschicht in den Innenraum 16 des Kanals 12 verteilen.

Eine weitere optionale Leitung 44 ist eine Druckluftleitung, die eine Druckluftquelle 48 einer Reinigungseinrichtung 50 mit einer Luftaustrittsdüse 52 der Reinigungseinrichtung 50 verbindet. In eine Vorwärtsfahrtrichtung F betrachtet ist diese Luftdüse 52 relativ zu dem Auslassbereich 46 vorgelagert. Wenn die Anordnung 30 bzw. das Schienenfahrzeug 32 in Fig. 5 gemäß dem Pfeil F von links nach rechts fährt, wird der in Fig. 5 nicht einsehbare Innenraum 16 des Kanals 12 zuerst dem Luftstrom der Luftdüse 52 ausgesetzt, bevor dort Material aus dem Auslassbereich 46 eingefüllt wird.

Ein weiteres optionales Merkmal ist eine weitere Wärmequelle 54, die analog zum Auslassbereich 46 gegenüberliegend zum Kanal 12 bzw. dessen geöffneter Oberseite positionierbar ist. Mit dieser Wärmequelle 54, die wiederum in die Vorwärtsfahrtrichtung F dem Auslassbereich 46 vorgelagert ist, können Kanalabschnitte vorgewärmt werden, bevor dort das Material eingefüllt wird. Auch kann der vorweg druchgeführte Säuberungsprozess des Kanals 12 mittels erwärmter Luft ausgeführt werden. Dieses erhöht die Prozessgeschwindigkeit des Schmelzvorgangs, da der Kanal 12 somit schon vorgewärmt ist. Die ggfs. abgesaugte Abluft kann dem Auslassprozess wieder zugeführt werden; dieses führt zu einem geringeren Energiebedarf beim Erhitzen des Luftstroms. Die Wärmequelle 54 kann beispielsweise elektrisch betrieben werden. Eine gesonderte elektrische Verbindung der Wärmequelle 54 mit dem Schienenfahrzeug 32 ist aus Darstellungsgründen nicht gezeigt.

Als ein weiteres optionale Merkmal ist in Fig. 5 eine Abschirmung 56 gezeigt. Diese erstreckt sich entlang des Kanals 12 sowie quer zu diesem, sodass dessen offenliegende Oberseite zumindest abschnittsweise gegenüber der Umgebung abgeschirmt ist. Optional sind an der Unterseite der Abschirmung 56 jegliche von Auslassbereich 46, weiterer Wärmequelle 54 und Luftdüse 52 angeordnet. Eine mögliche Erstreckung der Abschirmung 56 quer zu dem Kanal 12 kann analog zu dem nachstehenden Beispiel aus Fig. 6 bemessen sein. Mittels der Abschirmung 56 können Verschmutzungen des Innenraums 16 des Kanals 12 und/oder dort eingeführter Materialvolumen verhindert werden.

Als ein weiteres optionales Merkmal ist angedeutet, dass die erste Wärmequelle 36 und/oder die Schmelzeinrichtung 35 auch unmittelbar gegenüberliegend zu dem Kanal 12 und beispielsweise ebenfalls an der Abschirmung 56 positioniert sein kann. Diese entsprechende alternative Position von erster Wärmequelle bzw. Schmelzeinrichtung ist in Fig. 5 mit 36' bzw. 35' bezeichnet. Bevorzugt ist die Wärmequelle 36' in der Vorwärtsfahrtrichtung F betrachtet gegenüber dem Auslassbereich 46 nachgelagert positioniert. Ein Kanalabschnitt 12 kann dann erst mittels dieser Wärmequelle 36' erwärmt werden, nachdem dort Material aus dem Auslassbereich 46 eingefüllt wurde. Eine zusätzliche erste Wärmequelle 36 und insbesondere ein Extruder oder auch eine allgemeine Schmelzeinrichtung 35 in dem Wagon 32 ist dann nicht zwingend erforderlich.

Diese Variante ist insbesondere dann vorteilhaft, wenn das Material in einem zunächst festen Zustand in den Kanal 12 eingefüllt werden soll. Dann kann das feste Material im Innenraum 16 durch die entsprechend über dem Kanal 12 angeordnete Wärmequelle 36' erwärmt werden. Die Wärmequelle 36' kann beispielsweise Infrarotstrahler umfassen oder allgemeine Heizstrahler und/oder Heißluftgebläse. Auch in diesem Fall können wiederum die Luftdüse 52 und/oder die weitere Wärmequelle 54 vorgesehen sein.

In Fig. 5 ist ferner ein Abschnitt mit einer Länge L des Kanals 12 markiert, in dem das aufgeschmolzene Material gemäß jeglicher der Varianten aus Fig. 2 und Fig. 3 bereitgestellt werden kann. Eine Längenbegrenzung kann durch lediglich schematisch angedeutete Fließsperren 58 erreicht werden. Die Länge L kann wenigstens 0,25m, 0,50m, 1 m oder auch mehrere Meter betragen. Auf die entsprechenden Abschnitte mit der Länge L können Abschnitte ohne eingefülltes Materialvolumen folgen, die bevorzugt eine größere Länge aufweisen, beispielsweise wenigstens die doppelte oder dreifache Länge.

In Fig. 6 ist eine alternative Variante einer Anordnung 30 gezeigt. Die Blickachse entspricht wiederum derjenigen der Fig. 1 bis 3. Die alternative Anordnung 30 ist nicht zwingend auf dem Gleis 14 geführt, sondern auf einem Untergrund neben dem Kanal. Die angedeutete Oberfläche ist lediglich beispielhaft und der Kanal 12 kann z.B. allgemein zumindest teilweise in den Untergrund eingegraben oder darin abgesenkt sein. Die Anordnung 30 ist insbesondere manuell verschiebbar, z.B. im Sinne eines manuell verschiebbaren Wagens. Sie ist im gezeigten Beispiel neben dem Kanal 12 positioniert, könnte aber auch auf dem Gleis 14 fahren. Angedeutet sind Rollen 60, über die sich die Anordnung am Untergrund abstützt und entlang diesem verschiebbar ist.

Die Anordnung 30 weist wiederum einen Materialspeicher 34 auf. Über eine gestrichelt angedeutete Verbindung kann daraus Material zu einer Schmelzeinrichtung 35 mit einer Wärmequelle 36 geführt werden. Im gezeigten Fall kann die Anordnung 30 insbesondere eine Schmelztiegeleinrichtung umfassen, in der Materialvolumen nach Aufnahme in einem Schmelztiegel z.B. nach Art eines Bitumenkochers aufgeschmolzen werden. Anschließend kann das Material wiederum über eine gestrichelt angedeutete Verbindung und einen Auslassbereich 46, der gegenüberliegend zur offenen Seite des Kanals 12 positioniert ist, in den Kanal 12 eingefüllt werden. Gezeigt ist auch eine optionale Abschirmung 56, die den Kanal 12 in Querrichtung überspannt. Auch in diesem Fall kann eine Reinigungseinrichtung 50 und/oder eine vorwärmende Wärmequelle 54 vorgesehen und bevorzugt an einer Unterseite der Abschirmung 56 bereitgestellt sein (jeweils nicht gezeigt).

In Fig. 7 ist eine zu Fig. 6 im Wesentlichen analog ausgebildete Anordnung 30 gezeigt. Diese ist in diesem Fall jedoch nicht neben dem Kanal 12 positioniert, sondern überbrückt diesen. Sie weist beidseitig des Kanals 12 anordenbare Rollen 60 auf, die über einen Hauptkörper 62 der Anordnung 30 verbunden sind. Der Hauptkörper 62 umfasst ferner eine Schmelzeinrichtung 35 bzw. Wärmequelle 36, die analog zu Fig. 6 ausgebildet sein kann. Ebenso ist ein analoger Materialspeicher 34 vorgesehen sowie ein gegenüberliegend zum Kanal 12 positionierter Auslassbereich 46. Nicht gesondert dargestellt sind wiederum eine optionale Reinigungseinrichtung 50 und eine weitere vorwärmende Wärmequelle 54.

Auch wenn in den vorangehenden Beispielen von dem nachträglichen Bearbeiten bereits verlegter Kanäle 12 und Leitungen 18 ausgegangen wurde, ist die hier offenbarte Lösung nicht auf diesen Fall beschränkt. Stattdessen könnte auch während oder unmittelbar im Anschluss an ein Verlegen von Kanälen 12 und/oder Leitungen 18 ein Einfüllen eines Materialvolumens gemäß jeglichem hierin geschilderten Ansatz erfolgen. Beispielweise kann dies auch unmittelbar von einem Schienenfahrzeug aus erfolgen (oder auch einem anderen, nicht-spurgebundenen Fahrzeug), das einen Kanal 12 oder die Leitungen 18 verlegt. Eine Anordnung zum Einbringen des Materialvolumens ist dann bevorzugt in Fahrt- oder Verlegerichtung betrachtet nachlaufend positioniert.

Ebenso nicht gesondert gezeigt, aber dennoch möglich, ist das Anordnen weiterer Funktionsabschnitte, Bauwerke oder Kanäle unterhalb der hierin offenbarten Leitungs-Kanäle 12. So ist es bekannt, Leitungs-Kanäle oberhalb von und insbesondere unmittelbar auf Entwässerungskanälen zu positionieren (auch als Drän- oder Drainagekanäle bezeichnet).

Schließlich müssen die gezeigten Kanäle 12 nicht zwingend freiliegen und/oder sich unmittelbar neben einem Bahngleis oder außerhalb des Gefahrenbereichs eines Bahngleises erstrecken oder im Boden verlegt sein, sondern können auch aufgeständert sein, oder an Gegenständen angebracht sein. Ebenso können sie an Bauwerken wie Absturzsicherungen oder Wänden angeordnet sein. Sie können auch unterhalb von oder integriert in Bahnsteigen angeordnet sein (z.B. innerhalb von Bahnhöfen und als Teil bekannter Fertigbahnsteigteilsysteme).

## Patentansprüche

1. Verfahren zum Sichern wenigstens einer Leitung (18) einer Schienenverkehrsinfrastruktur (13),
wobei die Leitung (18) in einem Kanal (12) angeordnet ist, der sich entlang eines Gleises (14) erstreckt, und wobei das Verfahren umfasst:
- Bereitstellen wenigstens eines ersten aufgeschmolzenen kunststoffhaltigen Materialvolumens (20) in dem Kanal (12), wobei das Materialvolumen (20) die Leitung (18) zumindest abschnittsweise kontaktiert;
- Aushärten des Materialvolumens (20) und dadurch Sichern der Leitung (18) in dem Kanal (12).

2. Verfahren nach Anspruch 1,
**dadurch gekennzeichnet, dass** der Kanal (12) eine Mehrzahl von Leitungen (18) umfasst und das Materialvolumen (20) nach dem Aushärten die Leitungen (18) zumindest abschnittsweise miteinander verbindet.

3. Verfahren nach Anspruch 1 oder 2,
**dadurch gekennzeichnet, dass** wenigstens ein weiteres aufgeschmolzenes Materialvolumen (22) bereitgestellt wird, wobei die Mehrzahl der Materialvolumina (20, 22) aufeinanderfolgend und schichtartig in demselben Abschnitt des Kanals (12) bereitgestellt werden.

4. Verfahren nach Anspruch 3,
**dadurch gekennzeichnet, dass** das weitere aufgeschmolzene Materialvolumen (22) erst dann bereitgestellt wird, wenn das erste Materialvolumen (20) zumindest teilweise ausgehärtet ist.

5. Verfahren nach einem der vorangehenden Ansprüche,
**dadurch gekennzeichnet, dass** zumindest das erste Materialvolumen (20) außerhalb des Kanals (12) aufgeschmolzen und anschließend in diesen eingefüllt wird.

6. Verfahren nach einem Ansprüche 1 bis 4,
**dadurch gekennzeichnet, dass** zumindest das erste Materialvolumen (20) in einem zumindest teilweise festen Zustand in den Kanal (12) eingefüllt und erst anschließend dort aufgeschmolzen wird.

7. Verfahren nach Anspruch 6,
**dadurch gekennzeichnet, dass** das erste Materialvolumen (20) in dem festen Zustand folienartig ist oder feste Partikel umfasst.

8. Verfahren nach einem der vorangehenden Ansprüche,
**dadurch gekennzeichnet, dass** vor dem Bereitstellen zumindest des ersten Materialvolumens (20) der Kanal (12) zumindest abschnittsweise vorgewärmt und/oder per Luftstrom gesäubert wird.

9. Verfahren nach einem der vorangehenden Ansprüche,
**dadurch gekennzeichnet, dass** das ausgehärtete Materialvolumen (20) für eine Reparatur der Leitung wieder aufschmelzbar ist.

10. Verfahren nach einem der vorangehenden Ansprüche,
**dadurch gekennzeichnet, dass** wenigstens eine Fließsperre (58) bereitgestellt wird, die dazu eingerichtet ist, eine Ausbreitung des aufgeschmolzenen Materialvolumens (20) entlang des Kanals (12) zu begrenzen.

11. Anordnung (30) zum Sichern wenigstens einer Leitung (18) einer Schienenverkehrsinfrastruktur (13), wobei die Leitung (18) in einem Kanal (12) angeordnet ist, der sich entlang eines Gleises (14) erstreckt, und wobei die Anordnung (30) umfasst:
- einen Materialspeicher (34) zur Bevorratung eines kunststoffhaltigen Materials;
- wenigstens eine erste Wärmequelle (36) zum Aufschmelzen des Materials;
- einen Auslassbereich (46), der über dem Kanal (12) anordenbar ist und mittels dem das Material aus der Anordnung (30) und in den Kanal (12) führbar ist.

12. Anordnung (30) nach einem der vorangehenden Ansprüche,
ferner **gekennzeichnet durch**:
- eine weitere Wärmequelle (54) zum Vorwärmen des Kanals (12) bevor das Material dort eingefüllt wird; und/oder
- eine Reinigungseinrichtung (50), die dazu eingerichtet ist, einen in den Kanal (12) gerichteten Luftstrom zu erzeugen; und/oder
- einer Abschirmung (56), die über dem Kanal (12) positionierbar ist, um diesen zumindest teilweise von Umgebungseinflüssen abzuschirmen.

13. Anordnung (30) nach einem der vorangehenden Ansprüche,
**dadurch gekennzeichnet, dass** die Anordnung (30) entlang des Kanals (12) verschiebbar ist.

14. Anordnung (30) nach einem der vorangehenden Ansprüche,
**dadurch gekennzeichnet, dass** die Anordnung (30) zumindest teilweise an wenigstens einem Schienenfahrzeug (32) angeordnet ist, das auf dem Gleis (14) entlang des Kanals (12) positionierbar ist.

15. Anordnung (30) nach einem der Ansprüche 11 bis 14,
**dadurch gekennzeichnet, dass** die erste Wärmequelle (36) von einer der folgenden Einheiten der Anordnung (30) umfasst ist:
- einer Extrudereinheit;
- einem Fassschmelzer;
- einer Schmelztiegeleinrichtung.
